# EUROPÄISCHE PATENTSCHRIFT

(11) **EP 4 211 790 B1**
(45) Veröffentlichungstag und Bekanntmachung des Hinweises auf die Patenterteilung: **18.06.2025**
(21) Anmeldenummer: 21748843.6
(22) Anmeldetag: 22.07.2021
(51) Int. Cl.: H02P 6/20, B25F 5/00, H02P 1/46, H02P 6/21, H02P 6/182, H02P 29/60

(54) **ANLAUFMODUS FÜR EIN ELEKTROWERKZEUG**
START-UP MODE FOR A POWER TOOL
MODE DE DÉMARRAGE POUR UN OUTIL ÉLECTRIQUE

(30) Priorität: 09.09.2020 DE 102020211311
(43) Veröffentlichungstag der Anmeldung: 19.07.2023
(73) Patentinhaber: Festool GmbH, 73240 Wendlingen am Neckar (DE)
(72) Erfinder: HOFMANN, Tobias, 73230 Kirchheim (DE); MORGENSTERN, Norbert, 71032 Böblingen (DE)
(74) Vertreter: Patentanwälte Magenbauer & Kollegen Partnerschaft mbB
(86) Internationale Anmeldenummer: PCT/EP2021/070518
(87) Internationale Veröffentlichungsnummer: WO 2022/053214

(56) Entgegenhaltungen:
- EP-A1- 3 840 211
- EP-A2- 1 961 524
- EP-B1- 1 961 524
- WO-A1-2020/057552
- DE-A1- 102010 012 023
- US-A1- 2018 278 187
- US-B1- 9 369 073

## Beschreibung

Die Erfindung betrifft ein Elektrowerkzeug, insbesondere ein handgeführtes Elektrowerkzeug, beispielsweise ein Schleifgerät, umfassend ein Werkzeug, einen Elektromotor zum Antrieb des Werkzeugs und eine Steuereinheit zur Ansteuerung des Elektromotors mit einem Motorstrom. Die Steuereinheit verfügt über einen Anlaufmodus, in dem die Steuereinheit den Elektromotor derart ansteuert, dass der Elektromotor während des Anlaufmodus eine Drehzahlrampe durchläuft, bei der die Drehzahl des Elektromotors bis zu einer Arbeits-Drehzahl kontinuierlich erhöht wird. Beispielsweise erhöht die Steuereinheit im Anlaufmodus kontinuierlich die Frequenz des Motorstroms, um so die kontinuierliche Erhöhung der Drehzahl des Elektromotors zu erzielen.

Das Elektrowerkzeug wird ab Erreichen der Arbeits-Drehzahl vorzugsweise unter Verwendung eines sensorlosen Prinzips, insbesondere unter Verwendung eines Back-EMF-Prinzips, angesteuert. EMF steht für Elektromotive Force bzw. Elektromotorische Kraft. Das Elektrowerkzeug umfasst zweckmäßigerweise keinen Positionssensor zur Erfassung des aktuellen Rotorwinkels des Elektromotors. Die Steuereinheit ermittelt den aktuellen Rotorwinkel und/oder die aktuelle Drehzahl des Elektromotors sensorlos, beispielsweise auf Basis einer elektrischen Größe des Elektromotors, insbesondere einem Strom (z.B. dem Motorstrom) und/oder einer Spannung. Ab Erreichen der Arbeits-Drehzahl führt das Elektrowerkzeug die Kommutierung des Elektromotors auf Basis des (insbesondere sensorlos) ermittelten aktuellen Rotorwinkels und/oder der (insbesondere sensorlos) ermittelten aktuellen Drehzahl durch.

Vor Erreichen der Arbeits-Drehzahl - also im Anlaufmodus - setzt die Steuereinheit das sensorlose Prinzip zweckmäßigerweise nicht ein, z.B. weil das sensorlose Prinzip erst ab einer bestimmten Mindest-Drehzahl - der Arbeits-Drehzahl - funktioniert.

Die Drehzahlrampe ist für den Anlaufmodus derart auszulegen, dass der Elektromotor die Drehzahlrampe unter verschiedenen Bedingungen, insbesondere bei einer unterschiedlich starken, auf den Elektromotor wirkenden internen mechanischen Last, durchführen kann. Bei der internen mechanischen Last, die bei der Auslegung der Drehzahlrampe zu berücksichtigen ist, handelt es sich insbesondere um ein Trägheitsmoment, das dem Antrieb des Rotors entgegenwirkt.

Es ist zu vermeiden, dass (z.B. aufgrund einer zu steilen Drehzahlrampe im Anlaufmodus) der Rotor des Elektromotors dem von dem Elektromotor auf Basis des Motorstroms bereitgestellten elektrischen Feld nicht mehr folgen kann und der Anlauf des Elektromotors fehlschlägt. Insbesondere dann, wenn im Anlaufmodus keine Ermittlung und/oder keine Berücksichtigung des aktuellen Rotorwinkels und/oder der aktuellen Drehzahl erfolgt, ist es in der Regel nicht möglich, während des Anlaufmodus zu erkennen, dass der Elektromotor (z.B. aufgrund der internen mechanischen Last) zu langsam für eine vorliegende Drehzahlrampe beschleunigt und es ist dementsprechend in der Regel nicht möglich, in einem solchen Fall während des Anlaufmodus durch eine Reduzierung der Steigung der Drehzahlrampe und/oder durch eine Erhöhung des Motorstroms zu reagieren. Aus diesem Grund muss die Drehzahlrampe im Voraus flach genug ausgelegt sein, so dass der Elektromotor der Drehzahlrampe auch bei einer größeren internen mechanischen Last folgen kann. Eine flache Drehzahlrampe führt allerdings dazu, dass der Anlaufmodus länger dauert.

Die WO 2020/057552 A1 beschreibt ein Elektrowerkzeug und ein Verfahren zum Starten des Elektrowerkzeugs.

Die US 2018/0278187 A1 betrifft ein System und Verfahren zum Feld-orientierten Starten von dreiphasigen, sensorlosen Permanentmagnetsynchronmotoren.

Die EP 1 961 524 A2 betrifft eine Vorrichtung zum Verbinden einer Werkstück-Bearbeitungsmaschine mit einem Absaugschlauch.

Die DE 10 2010 012 023 A1 betrifft eine Hand-Werkzeugmaschine mit einem Teller-Werkzeug.

Eine Aufgabe der Erfindung besteht darin, den Anlaufmodus zu verbessern.

Die Aufgabe wird gelöst durch ein Elektrowerkzeug gemäß Anspruch 1. Die Steuereinheit des Elektrowerkzeugs ist ausgebildet, für den Anlaufmodus die Stromstärke des Motorstroms auf Basis der erfassten Temperatur einzustellen. Die Steuereinheit ist ausgebildet, bei einer höheren erfassten Temperatur den Motorstrom mit einer niedrigeren Stromstärke einzustellen und bei einer niedrigeren erfassten Temperatur den Motorstrom mit einer höheren Stromstärke einzustellen. Bevorzugt ist die Steuereinheit ausgebildet, für den Anlaufmodus die Steigung der Drehzahlrampe auf Basis der erfassten Temperatur einzustellen.

Die interne mechanische Last - also insbesondere das Trägheitsmoment - die dem Antrieb des Werkzeugs entgegenwirkt, weist eine Temperaturabhängigkeit auf. Über die erfasste Temperatur kann auf die Größe der internen mechanischen Last geschlossen werden und die Drehzahlrampe kann an die interne mechanische Last angepasst werden. Die Drehzahlrampe muss also nicht mehr stets auf den ''worst case" - also die größte interne mechanische Last - ausgelegt werden, sondern kann gemäß der erfassten Temperatur an die aktuell vorliegende interne mechanische Last angepasst werden. Dadurch wird es möglich, insbesondere in den Fällen, in denen nicht die größte interne mechanische Last vorliegt, den Anlaufmodus schneller durchzuführen.

Vorteilhafte Weiterbildungen sind Gegenstand der Unteransprüche.

Die Erfindung betrifft ferner ein System mit dem Elektrowerkzeug sowie einem Mobilgerät, über das der Anlaufmodus konfiguriert werden kann.

Die Erfindung betrifft ferner ein Verfahren zur Bereitstellung eines Anlaufmodus für ein Elektrowerkzeug, das ein Werkzeug und einen Elektromotor zum Antrieb des Werkzeugs umfasst, wobei der Elektromotor während des Anlaufmodus eine Drehzahlrampe durchläuft, bei der die Drehzahl des Elektromotors bis zu einer Arbeits-Drehzahl kontinuierlich erhöht wird, umfassend die Schritte: Erfassen einer Temperatur, Einstellen einer Stromstärke eines Motorstroms für den Anlaufmodus auf Basis der erfassten Temperatur, wobei bei einer höheren erfassten Temperatur der Motorstroms mit einer niedrigeren Stromstärke eingestellt wird, und bei einer niedrigeren erfassten Temperatur der Motorstroms mit einer höheren Stromstärke eingestellt wird, und Bereitstellen des Anlaufmodus mit der eingestellten Stärke des Motorstroms.

Die Erfindung betrifft ferner ein computerlesbares Medium, auf dem ein Computerprogrammprodukt gespeichert ist, das Befehle umfasst, die bewirken, dass das Elektrowerkzeug die Verfahrensschritte des Verfahrens ausführt.

Weitere exemplarische Details sowie beispielhafte Ausführungsformen werden nachstehend unter Bezugnahme auf die Figuren erläutert. Dabei zeigt
- Figur 1: eine schematische Darstellung eines Systems aus einem Elektrowerkzeug, einem Mobilgerät und einem Werkstück,
- Figur 2: eine schematische Darstellung eines Kopfabschnitts des Elektrowerkzeugs,
- Figur 3: eine schematische Darstellung eines Elektromotors, einer Steuereinheit, eines Temperatursensors und einer Bedieneinrichtung des Elektrowerkzeugs und
- Figur 4: ein Schaubild mit zwei Drehzahlrampen unterschiedlicher Steigung.

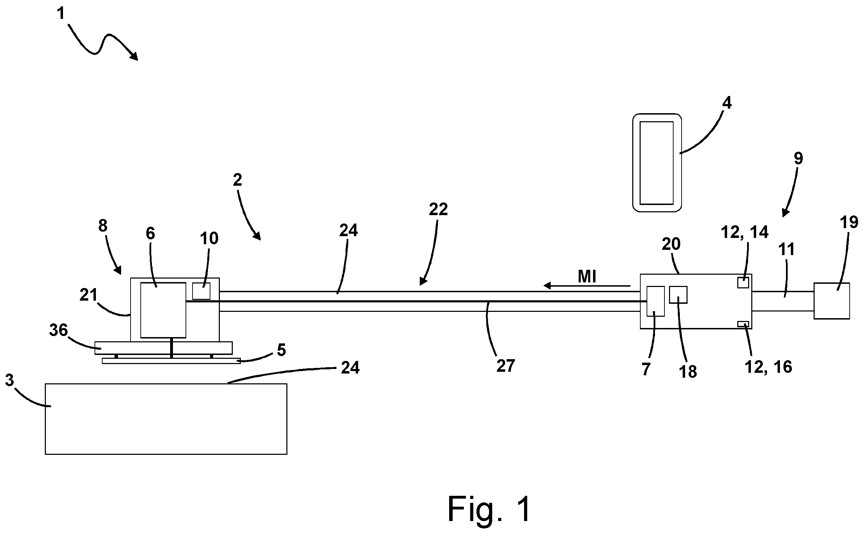

Die Figur 1 zeigt ein System 1, das ein Elektrowerkzeug 2, ein Werkstück 3 und optional ein Mobilgerät 4 umfasst. Das System 1 stellt ein rein exemplarisches Anwendungsumfeld für das Elektrowerkzeug 2 dar. Das Elektrowerkzeug 2 kann auch für sich genommen - also ohne die weiteren Komponenten des Systems 1 - bereitgestellt sein.

Das Elektrowerkzeug 2 ist exemplarisch ein handgeführtes Elektrowerkzeug. Das Elektrowerkzeug 2 kann von einem Benutzer mit einer oder mit zwei Händen gegriffen, getragen und/oder geführt werden. Exemplarisch ist das Elektrowerkzeug 2 ein Schleifgerät, insbesondere ein Exzenterschleifer. Das Elektrowerkzeug 2 ist exemplarisch ein Langhalsschleifer, insbesondere ein Langhals-Exzenterschleifer. Das Elektrowerkzeug 2 kann ferner als Exzenter-Polierer ausgeführt sein.

Das Elektrowerkzeug 2 umfasst ein Werkzeug 5, das exemplarisch als Schleifwerkzeug, insbesondere als Schleifteller, ausgeführt ist. Das Elektrowerkzeug 2 umfasst ferner einen Elektromotor 6 zum Antrieb des Werkzeugs 5. Der Elektromotor 6 ist exemplarisch als elektronisch kommutierter, insbesondere als sensorlos kommutierter Elektromotor ausgeführt. Insbesondere ist der Elektromotor 6 als bürstenloser Gleichstrommotor, BLDC-Motor, ausgeführt. Der Elektromotor 6 stellt eine Antriebs-Drehbewegung bereit, auf deren Basis das Werkzeug 5 in eine Arbeits-Bewegung versetzt wird.

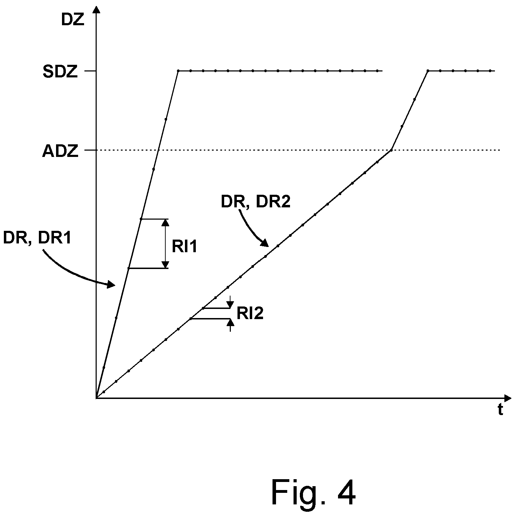

Das Elektrowerkzeug 2 umfasst ferner eine Steuereinheit 7 zur Ansteuerung des Elektromotors 6 mit einem Motorstrom MI. Die Steuereinheit 7 verfügt über einen Anlaufmodus, in dem die Steuereinheit 7 den Elektromotor 6 derart ansteuert, dass der Elektromotor 6 während des Anlaufmodus eine Drehzahlrampe DR durchläuft, bei der die Drehzahl des Elektromotors 6 bis zu einer Arbeits-Drehzahl ADZ kontinuierlich erhöht wird. Exemplarische Drehzahlrampen DR sind in der Figur 4 gezeigt. Die Steuereinheit 7 ist ausgebildet, für den Anlaufmodus die Steigung der Drehzahlrampe DR auf Basis einer erfassten Temperatur einzustellen und/oder für den Anlaufmodus die Stromstärke des Motorstroms MI auf Basis einer/der erfassten Temperatur einzustellen. Mit der Stromstärke des Motorstroms MI ist insbesondere die Amplitude des Motorstroms MI gemeint.

Exemplarisch umfasst das Elektrowerkzeug 2 einen Kopfabschnitt 8, der das Werkzeug 5 umfasst. Bevorzugt umfasst der Kopfabschnitt 8 den Elektromotor 6. Gemäß einer alternativen Ausgestaltung kann der Elektromotor 6 in einem anderen Abschnitt des Elektrowerkzeugs 2 angeordnet sein, beispielsweise in einem Benutzerabschnitt 9. Optional umfasst der Kopfabschnitt 8 einen Kopfabschnitt-Temperatursensor 10, der auch als zweiter Temperatursensor bezeichnet werden kann.

Exemplarisch umfasst das Elektrowerkzeug 2 den Benutzerabschnitt 9. Der Benutzerabschnitt 9 umfasst insbesondere einen Griffabschnitt 11, der von einem Benutzer mit seiner Hand gegriffen werden kann, um das Elektrowerkzeug 2 zu tragen und/oder zu führen. Exemplarisch umfasst der Benutzerabschnitt 9 eine Bedieneinrichtung 12, über die der mittels des Elektromotors 6 erfolgende Antrieb des Werkzeugs 5 eingeschaltet und/oder ausgeschaltet werden kann und/oder über die eine Soll-Drehzahl für den Elektromotor 6 eingestellt werden kann. Insbesondere umfasst die Bedieneinrichtung 12 ein erstes Bedienelement 14, das insbesondere als Schalter ausgeführt ist und über das zweckmäßigerweise der mittels des Elektromotors 6 erfolgende Antrieb des Werkzeugs 5 eingeschaltet und/oder ausgeschaltet werden kann. Exemplarisch umfasst die Bedieneinrichtung 12 ein zweites Bedienelement 16, das insbesondere als Drehrad ausgeführt ist und über das zweckmäßigerweise die Soll-Drehzahl für den Elektromotor 6 eingestellt werden kann.

Der Benutzerabschnitt 9 umfasst exemplarisch ferner die Steuereinheit 7. Gemäß einer alternativen Ausgestaltung kann die Steuereinheit 7 in einem anderen Abschnitt des Elektrowerkzeugs 2 angeordnet sein, insbesondere im Kopfabschnitt 8. Das Elektrowerkzeug 2, insbesondere der Benutzerabschnitt 9, umfasst einen Benutzerabschnitt-Temperatursensor 18, der auch als erster Temperatursensor bezeichnet werden kann.

Das Elektrowerkzeug 2 ist zweckmäßigerweise ausgebildet, die Temperatur (auf deren Basis die Einstellung der Steigung der Drehzahlrampe DR und/oder der Stärke des Motorstroms MI erfolgt) mit dem ersten Temperatursensor 18 zu erfassen. Der erste Temperatursensor 18 ist exemplarisch beabstandet von dem Elektromotor 6 angeordnet. Insbesondere ist der erste Temperatursensor 18 von dem Elektromotor 6 beabstandet und/oder thermisch isoliert, so dass die von dem ersten Temperatursensor 18 erfasste Temperatur zweckmäßigerweise nicht von der von dem Elektromotor 6 abgegebenen Wärme beeinflusst wird. Exemplarisch ist der Elektromotor 6 auf einer ersten Seite eines Halsabschnitts 22 angeordnet und der erste Temperatursensor 18 ist auf einer dem Elektromotor 6 abgewandten zweiten Seite des Halsabschnitts 22 angeordnet.

Optional verfügt der Benutzerabschnitt 9 über einen Schlauchanschluss 19, an den ein Saugschlauch angeschlossen werden kann. Der Schlauchanschluss 19 ist über einen durch das Elektrowerkzeug 2 verlaufenden Luftkanal mit einer am Kopfabschnitt 8 vorhandenen Saugöffnung fluidisch verbunden.

Der Benutzerabschnitt 9 verfügt exemplarisch über ein Benutzerabschnitt-Gehäuse 20. In dem Benutzerabschnitt-Gehäuse 20 ist insbesondere die Steuereinheit 7 und/oder der erste Temperatursensor 18 angeordnet. Exemplarisch ist an dem Benutzerabschnitt-Gehäuse 20 die Bedieneinrichtung 12, insbesondere das erste Bedienelement 14 und/oder das zweite Bedienelement 16 angeordnet. Exemplarisch ist an dem Benutzerabschnitt-Gehäuse 20 der Griffabschnitt 11 angebracht. An dem Griffabschnitt 11 ist exemplarisch der Schlauchanschluss 19 angebracht.

Der Kopfabschnitt 8 verfügt exemplarisch über ein Kopfabschnitt-Gehäuse 21, in dem insbesondere der Elektromotor 6 und/oder der Kopfabschnitt-Temperatursensor 10 angeordnet sind.

Gemäß einer möglichen Ausgestaltung ist die Steuereinheit 7 ausgebildet, die Temperatur, auf deren Basis die Steuereinheit 7 die Steigung der Drehzahlrampe DR und/oder die Stärke des Motorstroms für den Anlaufmodus einstellt, mittels mehrere Temperatursensoren, insbesondere mittels des ersten Temperatursensors 18 und des zweiten Temperatursensors zu bestimmen. Insbesondere erfasst die Steuereinheit 7 über den ersten Temperatursensor 18 einen ersten Temperaturwert und über den zweiten Temperatursensor einen zweiten Temperaturwert und stellt die Steigung der Drehzahlrampe DR und/oder die Stärke des Motorstroms für den Anlaufmodus auf Basis des ersten Temperaturwerts und des zweiten Temperaturwerts ein. Beispielsweise berechnet die Steuereinheit die Temperatur, auf deren Basis die Steuereinheit 7 die Steigung der Drehzahlrampe DR und/oder die Stärke des Motorstroms für den Anlaufmodus einstellt, aus dem ersten Temperaturwert und dem zweiten Temperaturwert, beispielsweise als Durchschnittswert.

Das Elektrowerkzeug 2 umfasst exemplarisch den Halsabschnitt 22, der zweckmäßigerweise ein insbesondere stangenförmig ausgeführtes Halselement 24 umfasst. Der Halsabschnitt 22, insbesondere das Halselement 24, verbindet den Kopfabschnitt 8, insbesondere das Kopfabschnitt-Gehäuse 21, mit dem Benutzerabschnitt 9, insbesondere dem Benutzerabschnitt-Gehäuse 20. Zweckmäßigerweise verläuft durch den Halsabschnitt 22, insbesondere durch das Halselement 24, eine elektrische Leitung 27, über die die Steuereinheit 7 dem Elektromotor 6 den Motorstrom MI zuführt. Ferner verläuft zweckmäßigerweise der vorstehend genannte Luftkanal durch den Halsabschnitt 22, insbesondere durch das Halselement 24.

Das Elektrowerkzeug 2 weist zweckmäßigerweise eine längliche Grundgestalt auf, die sich in einer Längsrichtung erstreckt. Exemplarisch nimmt der Halsabschnitt 22, insbesondere das Halselement 24, wenigstens 30%, wenigstens 40% oder wenigstens 50% der Längserstreckung des Elektrowerkzeugs 2 ein.

Das in der Figur 1 gezeigte Werkstück 3 verfügt exemplarisch über eine Werkstück-Fläche 24, die mit dem Werkzeug 5 bearbeitet, insbesondere abgeschliffen und/oder poliert, werden kann. Das Werkstück 3 ist z.B. eine Wand, insbesondere eine Deckenwand und/oder Seitenwand, eines Gebäudes. Die Oberfläche der Wand wird mit dem Werkzeug 5, insbesondere dem Schleifteller, abgeschliffen.

Das Mobilgerät 4 ist zweckmäßigerweise als Smartphone oder Tablet ausgeführt. Das Mobilgerät 4 ist insbesondere ausgebildet, mit dem Elektrowerkzeug 2, insbesondere der Steuereinheit 7, zu kommunizieren, vorzugsweise drahtlos, beispielsweise über Bluetooth, NFC, WLAN und/oder Mobilfunk.

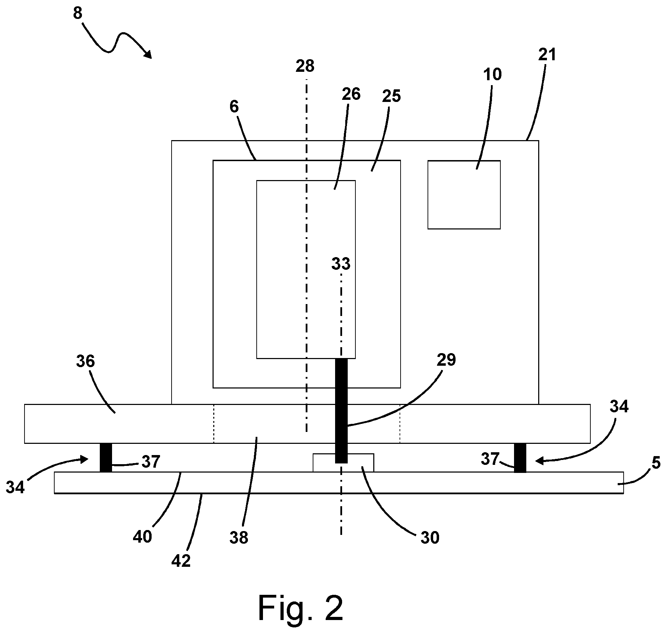

Die Figur 2 zeigt eine exemplarisch Detailansicht des Kopfabschnitts 8. Der Elektromotor 6 umfasst einen Stator 25 und einen Rotor 26, der gegenüber dem Stator 25 in die Antriebs-Drehbewegung versetzbar ist. Der Rotor 26 ist um eine Rotor-Drehachse 28 drehbar gelagert. Die Antriebs-Drehbewegung des Rotors 26 erfolgt um diese Rotor-Drehachse 28.

Der Rotor 26 umfasst einen Exzenterabschnitt 29, der exzentrisch zu der Rotor-Drehachse 28 angeordnet ist. Wenn der Rotor 26 seine Antriebs-Drehbewegung um die Rotor-Drehachse 28 durchführt, bewegt sich der Exzenterabschnitt 29 auf einer Kreisbahn um die Rotor-Drehachse 28. Das Werkzeug 5 ist an den Exzenterabschnitt 29 gekoppelt, so dass das Werkzeug 5 durch die Bewegung des Exzenterabschnitt 29 in die Arbeits-Bewegung versetzt wird. Exemplarisch verfügt das Elektrowerkzeug 2 über ein Drehlager 30, über das das Werkzeug 5 mit dem Exzenterabschnitt 29 gekoppelt ist. Das Drehlager 30 definiert eine Werkzeug-Drehachse 33, um die das Werkzeug 5 relativ zum Exzenterabschnitt 29 drehbar ist. Exemplarisch verläuft die Werkzeug-Drehachse 33 durch den Mittelpunkt des insbesondere als Schleifteller ausführten Werkzeugs 5. Die Werkzeug-Drehachse 33 ist insbesondere parallel zur Rotor-Drehachse 28 ausgerichtet und versetzt zu dieser angeordnet. Dadurch, dass das Werkzeug 5 relativ zum Exzenterabschnitt 29 drehbar gelagert ist, ist das Werkzeug 5 insbesondere in der Lage, als die Arbeits-Bewegung auch eine ungebundene Rotation durchführen. Bei der ungebundenen Rotation ist die Eigendrehung des Werkzeugs 5 - also die Drehung des Werkzeugs 5 um die Werkzeug-Drehachse 33 - zweckmäßigerweise unabhängig von der Antriebs-Drehbewegung.

Das Elektrowerkzeug 2, insbesondere der Kopfabschnitt 8, verfügt zweckmäßigerweise ferner über eine Bremseinrichtung 34, die ausgebildet ist, das Werkzeug 5 zu bremsen, insbesondere relativ zu einem Stationärabschnitt 36 des Elektrowerkzeugs 2. Die Bremseinrichtung 34 kann auch als Tellerbremse bezeichnet werden. Die Bremseinrichtung 34 dient insbesondere dazu, im Leerlauf des Elektrowerkzeugs 2 - also dann, wenn das Werkzeug 5 noch nicht das Werkstück 3, insbesondere die Werkstück-Fläche 24, berührt - die Eigendrehung des Werkzeugs 5 (relativ zum Stationärabschnitt 36) zu verlangsamen. Durch die Verlangsamung der Eigendrehung des Werkzeugs 5 kann eine beim Aufsetzen des Werkzeugs 5 auf das Werkstück 3, insbesondere die Werkstück-Fläche 24, erfolgende Riefenbildung verringert oder verhindert werden.

Der Stationärabschnitt 36 ist insbesondere relativ zum Stator 25 und/oder dem Kopfabschnitt-Gehäuse 21 stationär. Der Stationärabschnitt 36 folgt nicht der Antriebs-Drehbewegung. Der Stationärabschnitt 36 ist beispielsweise scheibenförmig ausgeführt und verfügt zweckmäßigerweise über eine Durchbrechung 38, durch die der Rotor 26, insbesondere der Exzenterabschnitt 29, herausgeführt ist.

Die Bremseinrichtung 34 umfasst exemplarisch ein Bremselement 37, das insbesondere zwischen dem Werkzeug 5 und dem Stationärabschnitt 36 angeordnet ist. Das Bremselement 37 ist insbesondere elastisch und/oder ringförmig ausgeführt. Das Bremselement 37 ist insbesondere als Gummiring, vorzugsweise als ringförmige Gummi-Manschette, ausgeführt. Das Bremselement 37 ist insbesondere eine Membran und/oder eine Lamelle. Das Bremselement 37 umläuft die Werkzeug-Drehachse 33. Das Bremselement 37 ist zweckmäßigerweise an dem Werkzeug 5 befestigt, so dass es sich mit dem Werkzeug 5 mitbewegt und insbesondere zusammen mit dem Werkzeug 5 die Arbeits-Bewegung durchführt. Zweckmäßigerweise reibt das Bremselement 37 an dem Stationärabschnitt 36 und bremst dadurch das Werkzeug 5 relativ zum Stationärabschnitt 36. Gemäß einer alternativen Ausgestaltung ist das Bremselement 37 an dem Stationärabschnitt 36 befestigt und reibt an dem Werkzeug 5, wodurch das Werkzeug 5 relativ zum Stationärabschnitt 36 gebremst wird.

Das Werkzeug 5 ist insbesondere als Schleifteller ausgeführt. Das Werkzeug 5 verfügt über eine insbesondere scheibenförmige Werkzeug-Oberseite 40 und/oder eine insbesondere scheibenförmige Werkzeug-Unterseite 42. Die Werkzeug-Oberseite 40 und/oder die Werkzeug-Unterseite 42 sind zweckmäßigerweise senkrecht zur Werkzeug-Drehachse 33 ausgerichtet. Die Werkzeug-Oberseite 40 steht zweckmäßigerweise in Kontakt mit dem Bremselement 37. Beispielsweise ist das Bremselement 37 an der Werkzeug-Oberseite 40 befestigt. Alternativ reibt das Bremselement 37 an der Werkzeug-Oberseite 40. Die Werkzeug-Unterseite 42 wird zweckmäßigerweise von einem Schleifmittel, insbesondere einer Schleifscheibe, gebildet. Das Elektrowerkzeug 2 kann mit der Werkzeug-Unterseite 42 auf das Werkstück 3, insbesondere die Werkstück-Fläche 24, aufgelegt werden, um das Werkstück 3 zu bearbeiten, insbesondere zu schleifen.

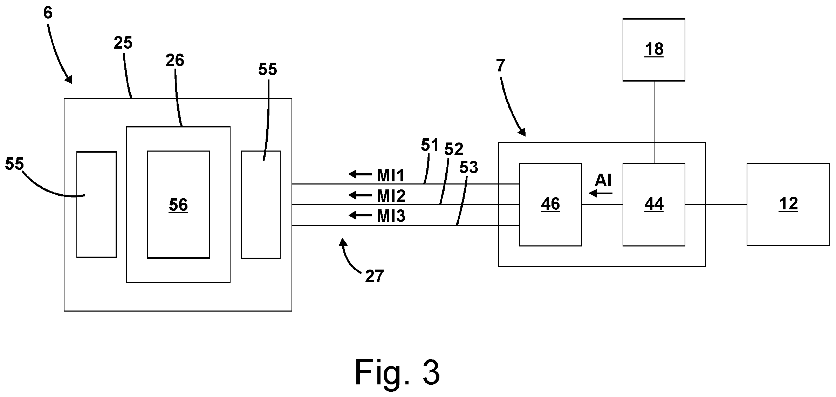

Die Figur 3 zeigt eine schematische Darstellung des Elektromotors 6, der Steuereinheit 7, des ersten Temperatursensors 18 und der Bedieneinrichtung 12.

Die Steuereinheit 7 umfasst exemplarisch eine Rechnereinheit 44 und eine Leistungseinheit 46. Die Rechnereinheit 44 ist insbesondere als Microcontroller ausgeführt und umfasst vorzugsweise einen Prozessor. Die Leistungseinheit 46 ist insbesondere als Leistungselektronik ausgeführt. Die Rechnereinheit 44 ist ausgebildet, eine Ansteuerungsinformation AI zu berechnen, auf deren Basis die Leistungseinheit 46 den Elektromotor 6 ansteuert. Insbesondere stellt die Leistungseinheit 46 auf Basis der Ansteuerungsinformation AI den Motorstrom MI bereit.

Exemplarisch umfasst der Motorstrom MI drei Motorströme - einen ersten Motorstrom MI1, einen zweiten Motorstrom MI2 und einen dritten Motorstrom MI3. Die Ansteuerungsinformation AI gibt zweckmäßigerweise Frequenz, Amplitude und/oder Phase für die Motorströme MI1, MI2, MI3 vor. Die von der Steuereinheit 7 zum Elektromotor 6 verlaufende elektrische Leitung umfasst zweckmäßigerweise wenigstens drei Adern - eine erste Ader 51, eine zweite Ader 52 und eine dritte Ader 53, wobei über jede Ader 51, 52, 53 ein jeweiliger Motorstrom MI1, MI2, MI3 übertragen wird.

Der Elektromotor 6, insbesondere der Stator 25, verfügt über mehrere Spulen 55. Jede der Spulen 55 wird mit einem jeweiligen Motorstrom MI1, MI2, MI3 bestromt, um die Antriebs-Drehbewegung des Rotors 26 zu bewirken. Der Elektromotor 6, insbesondere der Rotor 26, verfügt über einen Permanentmagneten 56, der zweckmäßigerweise magnetisch mit dem von den Spulen 55 bereitgestellten Magnetfeld interagiert und dadurch zu der Antriebs-Drehbewegung des Rotors 26 führt.

Die Steuereinheit 7 verfügt über den vorstehend erwähnten Anlaufmodus und über einen Arbeitsmodus, die im Folgenden näher erläutert werden sollen.

Im Arbeitsmodus dreht sich der Rotor 26 mit einer aktuellen Drehzahl, die insbesondere größer gleich der Arbeits-Drehzahl ADZ ist. Die aktuelle Drehzahl ist zweckmäßigerweise gleich der Soll-Drehzahl. Im Arbeitsmodus ist die Arbeits-Bewegung des Werkzeugs 5 schnell genug, um das Werkstück 3 zu bearbeiten.

Die Steuereinheit 7 ist ausgebildet, im Arbeitsmodus die Ansteuerung des Elektromotors 6 unter Verwendung eines sensorlosen Prinzips zur Ermittlung eines aktuellen Winkels des Rotors und/oder einer aktuellen Drehzahl des Elektromotors 6, durchzuführen. Insbesondere ist die Steuereinheit 7 ausgebildet, im Arbeitsmodus den Elektromotor sensorlos - also auf Basis eines sensorlosen Prinzips - zu kommutieren. Bei dem sensorlosen Prinzip handelt es sich insbesondere um ein Back-EMF-Prinzip. Bevorzug verfügt das Elektrowerkzeug 2 über keinen Positionssensor zur Erfassung des aktuellen Rotorwinkels und/oder der aktuellen Drehzahl des Elektromotors 6.

Beispielsweise ermittelt die Steuereinheit 7 auf Basis einer in den Spulen 55 erzeugten Gegenspannung (die insbesondere über die elektrische Leitung 27 abgreifbar ist) den aktuellen Rotorwinkel und/oder die aktuelle Drehzahl des Elektromotors 6 und führt auf Basis des aktuellen Rotorwinkels und/oder der aktuellen Drehzahl die Kommutierung des Elektromotors 6 durch - beispielsweise durch Bereitstellung der Motorströme MI1, MI2, MI3.

Insbesondere führt die Steuereinheit 7 im Arbeitsmodus eine Drehzahlregelung durch, bei der die Steuereinheit 7 die Motorströme MI1, MI2, MI3, insbesondere deren Frequenz und/oder Stromstärke, anpasst, so dass die (insbesondere sensorlos) erfasste aktuelle Drehzahl des Elektromotors 6 der insbesondere über die Bedieneinrichtung 12 eingegebenen Soll-Drehzahl entspricht. Beispielsweise berechnet die Rechnereinheit 44 auf Basis der Soll-Drehzahl, der (insbesondere sensorlos) erfassten aktuellen Drehzahl und/oder des (insbesondere sensorlos) erfassten aktuellen Rotorwinkels die Ansteuerinformation AI für die Leistungseinheit 46, und die Leistungseinheit 46 stellt die Motorströme MI1, MI2, MI3 auf Basis der Ansteuerinformation AI bereit. Die Ansteuerinformation AI gibt beispielsweise die Frequenz, Phase und/oder Stromstärke der Motorströme MI1, MI2, M3 vor.

Exemplarisch funktioniert das sensorlose Prinzip zur Erfassung des aktuellen Rotorwinkels und/oder der aktuellen Drehzahl erst ab Erreichen einer Mindestdrehzahl - der Arbeits-Drehzahl ADZ - des Rotors 26. Unterhalb der Arbeits-Drehzahl ADZ funktioniert das sensorlose Prinzip nicht.

Um die Arbeits-Drehzahl ADZ zu erreichen, verfügt die Steuereinheit 7 über den Anlaufmodus, in dem die Steuereinheit 7 die Drehzahl des Rotors 26 bis zur Mindestdrehzahl erhöhen kann (insbesondere ausgehend von einem Stillstand des Rotors 26) ohne hierfür den Rotorwinkel und/oder die Drehzahl zu erfassen und/oder zu berücksichtigen. Die Steuereinheit 7 ist zweckmäßigerweise ausgebildet, im Anlaufmodus die Ansteuerung des Elektromotors 6 ohne Erfassung und/oder Berücksichtigung des aktuellen Rotorwinkels des Elektromotors 6 und/oder der aktuellen Drehzahl des Elektromotors 6 durchzuführen. Im Anlaufmodus erfolgt insbesondere eine ''Open-Loop"-Steuerung - also insbesondere eine reine Steuerung (und keine Regelung) - der Drehzahl des Rotors 26. Die Drehzahlrampe DR unterliegt keiner Regelung. Vorzugsweise legt die Steuereinheit 7 die Steigung und/oder Stromstärke für den Anlaufmodus im Voraus fest. Insbesondere führt die Steuereinheit 7 während des Durchlaufens der Drehzahlrampe keine Anpassung der Steigung der Drehzahlrampe und/oder keine Änderung der Stromstärke, insbesondere der Amplitude, des Motorstroms MI durch.

Die Figur 4 zeigt ein Schaubild, bei dem die Drehzahl DZ des Rotors 26 über der Zeit t aufgetragen ist. Das Schaubild umfasst als Beispiele der Drehzahlrampe DR eine erste Drehzahlrampe DR1 und eine zweite Drehzahlrampe DR2. Die auf die Drehzahlrampe DR bezogenen Erläuterungen gelten zweckmäßigerweise für die erste Drehzahlrampe DR1 und/oder die zweite Drehzahlrampe DR2. Die Drehzahlrampe DR ist vorzugsweise monoton steigend, insbesondere streng monoton steigend. Exemplarisch ist die Drehzahlrampe DR eine Gerade. Die Drehzahlrampe DR hat insbesondere eine konstante Steigung. Die Drehzahlrampe DR beginnt zweckmäßigerweise bei einer Drehzahl von 0 und verläuft mindestens bis der Arbeits-Drehzahl ADZ. Die Drehzahlrampe DR umfasst zweckmäßigerweise eine zeitliche Abfolge an Drehzahl-Werten. Die Drehzahl-Werte sind in der Figur 4 als auf den Drehzahlrampen DR1, DR2 liegende Punkte gezeigt. Die Steuereinheit 7 ist insbesondere ausgebildet, für jeden Drehzahl-Wert eine jeweilige Ansteuerinformation AI bereitzustellen, und auf Basis der jeweiligen Ansteuerinformation AI jeweilige Motorströme MI1, MI2, MI3 bereitzustellen. Zweckmäßigerweise ist die Steuereinheit 7 ausgebildet, die Motorströme MI1, MI2, MI3 mit einer kontinuierlich steigenden Frequenz bereitzustellen, um so eine kontinuierliche Erhöhung der Drehzahl des Rotors 26 gemäß der Drehzahlrampe DR zu erzielen.

Zweckmäßigerweise ist die Drehzahlrampe DR in der Steuereinheit 7 bereits vor Beginn der Drehzahlrampe DR - also bevor die Steuereinheit 7 den Elektromotor 6 gemäß der Drehzahlrampe DR ansteuert - vollständig festgelegt. Beispielsweise ist die Drehzahlrampe DR, insbesondere die Drehzahl-Werte der Drehzahlrampe DR, in der Steuereinheit 7 gespeichert, und zwar vorzugsweise bevor die Steuereinheit 7 den Elektromotor 6 gemäß der Drehzahlrampe DR ansteuert. Ferner ist es möglich, dass in der Steuereinheit 7 eine Rampeninformation hinterlegt ist (insbesondere vor Beginn der Drehzahlrampe DR), durch die die Drehzahlrampe DR festgelegt ist. Beispielsweise legt die Rampeninformation die Steigung der Drehzahlrampe DR fest. Insbesondere umfasst die Rampeninformation ein Rampen-Inkrement RI, das beispielsweise die Drehzahl-Differenz zweier in der Drehzahlrampe DR zeitlich direkt aufeinander folgender Drehzahl-Werte beschreibt. Zweckmäßigerweise sind die Drehzahl-Werte zeitlich jeweils gleich zueinander beabstandet.

Bevorzugt ist die Steuereinheit 7 ausgebildet, bei Erreichen der Arbeits-Drehzahl ADZ von dem Anlaufmodus in den Arbeitsmodus zu wechseln und im Arbeitsmodus die Ansteuerung des Elektromotors 6 unter Verwendung eines sensorlosen Prinzips, insbesondere unter Verwendung eines Back-EMF-Prinzips, zur Ermittlung eines aktuellen Rotorwinkels und/oder einer aktuellen Drehzahl des Elektromotors 6 durchzuführen. Insbesondere führt die Steuereinheit 7 ab Erreichen der Arbeits-Drehzahl ADZ eine Drehzahl-Regelung durch. Sofern die Soll-Drehzahl SDZ größer ist als die Arbeits-Drehzahl ADZ, kann nach Erreichen der Arbeits-Drehzahl ADZ im Arbeitsmodus die Drehzahl weiter erhöht werden, bis die Soll-Drehzahl SDZ erreicht ist. Die weitere Erhöhung kann exemplarisch mit der gleichen Steigung wie die Drehzahlrampe oder mit einer anderen Steigung erfolgen.

Auf den Rotor 26 wirkt eine interne mechanische Last, die der Erhöhung der Drehzahl des Rotors 26 entgegenwirkt und die im Anlaufmodus überwunden werden muss, um die Drehzahl des Rotors 26 bis zur Arbeits-Drehzahl ADZ erhöhen zu können. Die auf den Rotor 26 wirkende interne mechanische Last ist insbesondere temperaturabhängig, und zwar exemplarisch derart, dass die interne mechanische Last bei steigender Temperatur sinkt und bei sinkender Temperatur steigt.

Exemplarisch handelt es sich bei der temperaturabhängigen internen mechanischen Last um das auf den Rotor 26 wirkende Trägheitsmoment. Dieses Trägheitsmoment ist insbesondere von der Bremswirkung, zweckmäßigerweise der Bremskraft, der Bremseinrichtung 34, abhängig. Bei einer stärkeren Bremswirkung, insbesondere bei einer stärkeren Bremskraft, ist das auf den Rotor 26 wirkende Trägheitsmoment geringer als bei einer schwächeren Bremswirkung, insbesondere einer schwächeren Bremskraft. Dies liegt insbesondere daran, dass das Werkzeug 5 aufgrund der größeren Bremswirkung weniger schnell um die Werkzeug-Drehachse 33 gedreht wird (insbesondere weniger schnell als die Drehzahl des Rotors 26). Bei einer geringeren Bremswirkung, insbesondere bei einer geringeren Bremskraft, ist das auf den Rotor 26 wirkende Trägheitsmoment größer als bei einer stärkeren Bremswirkung, insbesondere einer größeren Bremskraft. Dies liegt insbesondere daran, dass das Werkzeug 5 aufgrund der geringeren Bremswirkung schneller um die Werkzeug-Drehachse 33 gedreht wird (beispielsweise mit der Drehzahl des Rotors 26).

Die Bremswirkung, insbesondere die Bremskraft, der Bremseinrichtung 34 ist exemplarisch temperaturabhängig. Beispielsweise ist der Reibungskoeffizient der mit dem Bremselement 37 bereitgestellten Reibung temperaturabhängig. Beispielsweise steigt die Bremswirkung, insbesondere die Bremskraft, vorzugsweise der Reibungskoeffizient mit steigender Temperatur und sinkt mit sinkender Temperatur.

Die Steuereinheit 7 ist zweckmäßigerweise ausgebildet, diese Temperaturabhängigkeit im Anlaufmodus zu berücksichtigen und insbesondere zu kompensieren.

Bevorzugt ist die Steuereinheit 7 ausgebildet, auf Basis der erfassten Temperatur die Steigung der Drehzahlrampe DR einzustellen. Beispielsweise ist die Steuereinheit 7 ausgebildet, bei einer höheren erfassten Temperatur eine höhere Steigung der Drehzahlrampe DR einzustellen und bei einer niedrigeren erfassten Temperatur eine niedriger Steigung der Drehzahlrampe DR einzustellen.

Die Steuereinheit 7 ist insbesondere ausgebildet, auf Basis der erfassten Temperatur wahlweise eine erste Drehzahlrampe DR1 mit einer ersten Steigung oder eine zweite Drehzahlrampe DR2 mit einer zweiten Steigung einzustellen und die eingestellte Drehzahlrampe für den Anlaufmodus zu verwenden. Exemplarisch ist die zweite Steigung kleiner als die erste Steigung.

Insbesondere ist die Steuereinheit 7 ausgebildet, in Ansprechen darauf, dass sich die erfasste Temperatur in einem ersten Temperaturbereich befindet, die erste Drehzahlrampe DR1 für den Anlaufmodus zu einzustellen und in Ansprechen darauf, dass sich die erfasste Temperatur in einem zweiten Temperaturbereich befindet, die zweite Drehzahlrampe DR2 für den Anlaufmodus zu einzustellen. Die im ersten Temperaturbereich enthaltenen Temperaturen sind zweckmäßigerweise höher als die im zweiten Temperaturbereich enthaltenen Temperaturen. Der erste und der zweite Temperaturbereich sind vorzugsweise nicht-überlappend.

Zweckmäßigerweise sind die erste Drehzahlrampe DR1 und die zweite Drehzahlrampe DR2 in der Steuereinheit 7 vollständig festgelegt, insbesondere vor Durchführung des Anlaufmodus. Beispielsweise sind die Drehzahlrampen DR1, DR2, insbesondere die jeweiligen Drehzahl-Werte der Drehzahlrampen DR1, DR2 in der Steuereinheit 7 gespeichert, und zwar vorzugsweise bevor die Steuereinheit 7 den Elektromotor 6 gemäß der ausgewählten Drehzahlrampe ansteuert. Ferner ist es möglich, dass in der Steuereinheit 7 eine erste Rampeninformation und eine zweite Rampeninformation hinterlegt sind (insbesondere vor Ansteuerung des Elektromotors 6 gemäß der eingestellten Drehzahlrampe). Die erste Rampeninformation legt die erste Drehzahlrampe DR1, insbesondere deren Steigung, fest und die zweite Rampeninformation legt die zweite Drehzahlrampe DR2, insbesondere deren Steigung, fest. Exemplarisch umfasst die erste Rampeninformation ein ersten Rampen-Inkrement RI1 und die zweite Rampeninformation umfasst ein zweites Rampen-Inkrement RI2. Das erste Rampen-Inkrement RI1 beschreibt beispielsweise die Drehzahl-Differenz zweier in der ersten Drehzahlrampe DR1 zeitlich direkt aufeinander folgender Drehzahl-Werte. Das zweite Rampen-Inkrement RI2 beschreibt beispielsweise die Drehzahl-Differenz zweier in der zweiten Drehzahlrampe DR2 zeitlich direkt aufeinander folgender Drehzahl-Werte. Exemplarisch ist das erste Rampen-Inkrement RI1 größer als das zweite Rampen-Inkrement RI2.

Zweckmäßigerweise ist die Steuereinheit 7 ausgebildet, auf Basis der erfassten Temperatur wahlweise die erste Rampeninformation oder die zweite Rampeninformation zu wählen und die Drehzahlrampe für den Anlaufmodus auf Basis der gewählten Rampeninformation zu erzeugen.

Bevorzugt ist die Steuereinheit 7 ausgebildet, auf Basis der erfassten Temperatur die Stromstärke des Motorstroms MI einzustellen. Die Einstellung der Stromstärke auf Basis der erfassten Temperatur erfolgt insbesondere alternativ oder zusätzlich zu der vorstehend erläuterten Einstellung der Steigung der Drehzahlrampe DR auf Basis der erfassten Temperatur.

Bevorzugt ist die Steuereinheit 7 ausgebildet, bei einer höheren erfassten Temperatur den Motorstrom MI mit einer niedrigeren Stromstärke, insbesondere kleineren Amplitude, einzustellen und bei einer niedrigeren erfassten Temperatur den Motorstrom MI mit einer höheren Stromstärke, insbesondere größeren Amplitude, einzustellen. Insbesondere ist die Steuereinheit 7 ausgebildet, den ersten Motorstrom MI1, zweiten Motorstrom MI2 und dritten Motorstrom MI3 bei der höheren erfassten Temperatur mit einer jeweils höheren Stromstärke, insbesondere größeren Amplitude, einzustellen und bei einer niedrigeren erfassten Temperatur mit einer jeweils niedrigen Stromstärke, insbesondere kleineren Amplitude, einzustellen.

Insbesondere ist die Steuereinheit 7 ausgebildet, in Ansprechen darauf, dass sich die erfasste Temperatur in einem ersten Temperaturbereich befindet, die Stromstärke, insbesondere die Amplitude, der Motorströme MI1, MI2, MI3 auf einen ersten Wert zu setzen und in Ansprechen darauf, dass sich die erfasste Temperatur in einem zweiten Temperaturbereich befindet, die Stromstärke, insbesondere die Amplitude, der Motorströme MI1, MI2, MI3 auf einen zweiten Wert zu setzen. Der zweite Wert ist zweckmäßigerweise größer als der erste Wert. Die im ersten Temperaturbereich enthaltenen Temperaturen sind zweckmäßigerweise höher als die im zweiten Temperaturbereich enthaltenen Temperaturen. Der erste und der zweite Temperaturbereich sind vorzugsweise nicht-überlappend.

Bevorzugt ist der Anlaufmodus über das Mobilgerät 4 konfigurierbar. Beispielsweise kann über das Mobilgerät 4 die Berücksichtigung der Temperatur bei der Einstellung der Steigung der Drehzahlrampe DR und/oder der Stärke des Motorstroms MI, aktiviert und/oder deaktiviert werden, insbesondere durch eine Eingabe des Benutzers. Ferner ist es über das Mobilgerät 4 zweckmäßigerweise möglich, die Steigung der Drehzahlrampe DR und/oder die Stärke des Motorstroms MI einzustellen, insbesondere durch eine Eingabe des Benutzers. Alternativ oder zusätzlich dazu ist es vorzugsweise möglich, den Anlaufmodus über die Bedieneinrichtung 12 zu konfigurieren, insbesondere in vorstehend genannter Weise.

Vorzugsweise wird das Elektrowerkzeug 2 gemäß dem folgenden Verfahren betrieben:
In einem ersten Schritt wird das Elektrowerkzeug 2 eingeschaltet, insbesondere über die Bedieneinrichtung 12.

In einem zweiten Schritt wird eine erste Temperatur erfasst, insbesondere mit dem ersten Temperatursensor 18. Bei der erfassten ersten Temperatur handelt es sich insbesondere um eine Umgebungstemperatur des Elektrowerkzeugs 2. Die erfasste erste Temperatur ist vorzugsweise keine Motortemperatur eines laufenden Elektromotors.

In einem dritten Schritt stellt die Steuereinheit 7 auf Basis der erfassten ersten Temperatur eine erste Steigung einer Drehzahlrampe DR für den Anlaufmodus ein. Alternativ oder zusätzlich dazu stellt die Steuereinheit 7 auf Basis der erfassten ersten Temperatur eine erste Stromstärke, insbesondere eine erste Amplitude, des Motorstroms MI für den Anlaufmodus ein.

In einem vierten Schritt stellt die Steuereinheit 7 den Anlaufmodus mit der eingestellten ersten Steigung der Drehzahlrampe DR und/oder der eingestellten ersten Stromstärke des Motorstroms MI bereit. Die Drehzahl des Rotors 26 wird gemäß der Drehzahlrampe DR erhöht, mindestens solange, bis die Arbeits-Drehzahl ADZ erreicht wird.

In einem optionalen fünften Schritt wird das Elektrowerkzeug 2 ausgeschaltet (insbesondere über die Bedieneinrichtung 12) und die Drehzahl des Rotors 26 sinkt unter die Arbeits-Drehzahl ADZ.

In einem optionalen sechsten Schritt wird das Elektrowerkzeug 2 erneut eingeschaltet.

In einem optionalen siebten Schritt wird eine zweite Temperatur erfasst, insbesondere mit dem ersten Temperatursensor 18. Die im siebten Schritt erfasste zweite Temperatur unterscheidet sich exemplarisch (in ihrem Wert) von der im zweiten Schritt erfassten ersten Temperatur.

In einem optionalen achten Schritt stellt die Steuereinheit 7 auf Basis der erfassten zweiten Temperatur eine zweite Steigung der Drehzahlrampe DR für den Anlaufmodus ein. Alternativ oder zusätzlich dazu stellt die Steuereinheit 7 auf Basis der erfassten zweiten Temperatur eine zweite Stromstärke, insbesondere eine zweite Amplitude, des Motorstroms MI für den Anlaufmodus ein. Die im achten Schritt eingestellte zweite Steigung und/oder zweite Stromstärke unterscheidet sich zweckmäßigerweise von der im dritten Schritt eingestellten ersten Steigung und/oder ersten Stromstärke.

In einem optionalen neunten Schritt stellt die Steuereinheit 7 den Anlaufmodus mit der eingestellten zweiten Steigung der Drehzahlrampe DR und/oder der eingestellten zweiten Stromstärke des Motorstroms MI bereit. Die Drehzahl des Rotors 26 wird gemäß der Drehzahlrampe DR erhöht, mindestens solange, bis die Arbeits-Drehzahl ADZ erreicht wird.

Die vorgenannten Schritte werden insbesondere zeitlich aufeinanderfolgend durchgeführt, und zwar in der Reihenfolge, in der sie vorstehend erläutert werden.

## Patentansprüche

1. Elektrowerkzeug (2), insbesondere handgeführtes Elektrowerkzeug, beispielsweise Schleifgerät, umfassend ein Werkzeug (5), einen Elektromotor (6) zum Antrieb des Werkzeugs (5) und eine Steuereinheit (7) zur Ansteuerung des Elektromotors (6) mit einem Motorstrom (MI), wobei die Steuereinheit (7) über einen Anlaufmodus verfügt, in dem die Steuereinheit (7) den Elektromotor (6) ansteuert, so dass der Elektromotor (6) während des Anlaufmodus eine Drehzahlrampe (DR) durchläuft, bei der die Drehzahl des Elektromotors (6) bis zu einer Arbeits-Drehzahl kontinuierlich (ADZ) erhöht wird, wobei die Steuereinheit (7) ausgebildet ist, für den Anlaufmodus die Stärke des Motorstroms (MI) auf Basis einer erfassten Temperatur einzustellen, **dadurch gekennzeichnet, dass** die Steuereinheit (7) ausgebildet ist, bei einer höheren erfassten Temperatur den Motorstrom (MI) mit einer niedrigeren Stromstärke einzustellen und bei einer niedrigeren erfassten Temperatur den Motorstrom (MI) mit einer höheren Stromstärke einzustellen.

2. Elektrowerkzeug (2) nach Anspruch 1, wobei die Steuereinheit (7) ausgebildet ist, für den Anlaufmodus die Steigung der Drehzahlrampe (DR) auf Basis der erfassten Temperatur einzustellen.

3. Elektrowerkzeug (2) nach Anspruch 2, wobei die Steuereinheit (7) ausgebildet ist, bei einer höheren erfassten Temperatur eine höhere Steigung der Drehzahlrampe (DR) einzustellen und bei einer niedrigeren erfassten Temperatur eine niedrigere Steigung der Drehzahlrampe (DR) einzustellen.

4. Elektrowerkzeug (2) nach einem voranstehenden Anspruch, wobei die Steuereinheit (7) ausgebildet ist, bei Erreichen der Arbeits-Drehzahl (ADZ) von dem Anlaufmodus in einen Arbeitsmodus zu wechseln und im Arbeitsmodus die Ansteuerung des Elektromotors (6) unter Verwendung eines sensorlosen Prinzips, insbesondere unter Verwendung eines Back-EMF-Prinzips, zur Ermittlung eines aktuellen Rotorwinkels und/oder einer aktuellen Drehzahl des Elektromotors (6) durchzuführen.

5. Elektrowerkzeug (2) nach einem voranstehenden Anspruch, wobei die Steuereinheit (7) ausgebildet ist, im Anlaufmodus die Ansteuerung des Elektromotors (6) ohne Erfassung und/oder Berücksichtigung eines Rotorwinkels des Elektromotors (6) und/oder einer Drehzahl des Elektromotors (6) durchzuführen.

6. Elektrowerkzeug (2) nach einem voranstehenden Anspruch, umfassend einen von dem Elektromotor beabstandeten ersten Temperatursensor (18) zur Erfassung der Temperatur.

7. Elektrowerkzeug (2) nach Anspruch 6, wobei das Elektrowerkzeug (2) über einen Halsabschnitt (22) verfügt und der Elektromotor (6) auf einer ersten Seite des Halsabschnitts (22) angeordnet ist und der erste Temperatursensor (18) auf einer dem Elektromotor (6) abgewandten zweiten Seite des Halsabschnitts (22) angeordnet ist.

8. Elektrowerkzeug (2) nach einem voranstehenden Anspruch, wobei das Elektrowerkzeug (2) als Langhalsschleifer ausgeführt ist.

9. Elektrowerkzeug (2) nach einem voranstehenden Anspruch, umfassend eine Bremseinrichtung (34) zum Bremsen des Werkzeugs (5) während des Anlaufmodus, wobei die Bremswirkung der Bremseinrichtung temperaturabhängig ist, und wobei die Steuereinheit (7) ausgebildet ist, über die Einstellung der Steigung und/oder der Stromstärke die Temperaturabhängigkeit der Bremseinrichtung zu berücksichtigen.

10. Elektrowerkzeug (2) nach einem voranstehenden Anspruch, ferner umfassend eine Bedieneinrichtung (12), über die der Anlaufmodus konfiguriert werden kann.

11. System (1) mit einem Elektrowerkzeug (2) nach einem voranstehenden Anspruch sowie einem Mobilgerät (4), über das der Anlaufmodus konfiguriert werden kann.

12. Verfahren zur Bereitstellung eines Anlaufmodus für ein Elektrowerkzeug (2), das ein Werkzeug (5) und einen Elektromotor (6) zum Antrieb des Werkzeugs (5) umfasst, wobei der Elektromotor (6) während des Anlaufmodus eine Drehzahlrampe (DR) durchläuft, bei der die Drehzahl des Elektromotors (6) bis zu einer Arbeits-Drehzahl (ADZ) kontinuierlich erhöht wird, umfassend die Schritte:
- Erfassen einer Temperatur,
- für den Anlaufmodus: Einstellen einer Stromstärke eines Motorstroms (MI) auf Basis der erfassten Temperatur, **dadurch gekennzeichnet, dass** bei einer höheren erfassten Temperatur der Motorstroms (MI) mit einer niedrigeren Stromstärke eingestellt wird, und bei einer niedrigeren erfassten Temperatur der Motorstroms (MI) mit einer höheren Stromstärke eingestellt wird, und
- Bereitstellen des Anlaufmodus mit der eingestellten Stromstärke des Motorstroms (MI).

13. Verfahren nach Anspruch 12, wobei das Elektrowerkzeug (2) nach einem der Ansprüche 1 bis 10 ausgebildet ist.

14. Computerlesbares Medium, auf dem ein Computerprogrammprodukt gespeichert ist, das Befehle umfasst, die bewirken, dass das Elektrowerkzeug (2) nach Anspruch 1 die Verfahrensschritte nach Anspruch 12 oder 13 ausführt.

## Claims

1. Power tool (2), in particular a hand-held power tool, for example a sander, comprising a tool (5), an electric motor (6) for driving the tool (5), and a control unit (7) for driving the electric motor (6) with a motor current (MI), the control unit (7) having a start-up mode in which the control unit (7) drives the electric motor (6), so that the electric motor (6) undergoes a rotational speed ramp (DR) during the start-up mode, in which rotational speed ramp the rotational speed of the electric motor (6) is increased continuously (ADZ) up to a working rotational speed, the control unit (7) being configured to set, for the start-up mode, the strength of the motor current (MI) on the basis of a detected temperature, **characterized in that** the control unit (7) is configured to set the motor current (MI) with a lower current strength for a higher detected temperature and to set the motor current (MI) with a higher current strength for a lower detected temperature.

2. Power tool (2) according to claim 1, wherein the control unit (7) is configured to set, for the start-up mode, the slope of the rotational speed ramp (DR) on the basis of the detected temperature.

3. Power tool (2) according to claim 2, wherein the control unit (7) is configured to set a higher slope of the rotational speed ramp (DR) for a higher detected temperature and to set a lower slope of the rotational speed ramp (DR) for a lower detected temperature.

4. Power tool (2) according to a preceding claim, wherein the control unit (7) is configured to change from the starting mode to a working mode when the working rotational speed (ADZ) is reached and, in the working mode, to carry out the control of the electric motor (6) using a sensorless principle, in particular using a Back-EMF principle, for determining a present rotor angle and/or a present rotational speed of the electric motor (6).

5. Power tool (2) according to a preceding claim, wherein the control unit (7) is configured to carry out the driving of the electric motor (6) in the start-up mode without detecting and/or taking into account a rotor angle of the electric motor (6) and/or a rotational speed of the electric motor (6) .

6. Power tool (2) according to a preceding claim, comprising a first temperature sensor (18) for detecting the temperature, the first temperature sensor being spaced apart from the electric motor.

7. Power tool (2) according to claim 6, wherein the power tool (2) has a neck section (22) and the electric motor (6) is arranged on a first side of the neck section (22) and the first temperature sensor (18) is arranged on a second side of the neck section (22), the second side facing away from the electric motor (6).

8. Power tool (2) according to a preceding claim, wherein the power tool (2) is a long-neck sander.

9. Power tool (2) according to a preceding claim, comprising a braking device (34) for braking the tool (5) during the start-up mode, the braking effect of the braking device being temperature-dependent, and the control unit (7) being configured to take into account the temperature dependence of the braking device via the setting of the slope and/or the current strength.

10. Power tool (2) according to a preceding claim, further comprising an operating device (12) via which the start-up mode can be configured.

11. System (1) comprising a power tool (2) according to a preceding claim and a mobile device (4) via which the start-up mode can be configured.

12. Method for providing a start-up mode for a power tool (2) comprising a tool (5) and an electric motor (6) for driving the tool (5), wherein the electric motor (6) undergoes a rotational speed ramp (DR) during the start-up mode in which rotational speed ramp the rotational speed of the electric motor (6) is continuously increased up to a working rotational speed (ADZ), the method comprising the steps:
- detecting a temperature,
- for the start-up mode: setting a current strength of a motor current (MI) based on the detected temperature, **characterized in that**, for a higher detected temperature, the motor current (MI) is set with a lower current strength, and, for a lower detected temperature, the motor current (MI) is set with a higher current strength, and
- providing the start-up mode with the set current strength of the motor current (MI).

13. Method according to claim 12, wherein the power tool (2) is adapted in accordance with one of claims 1 to 10.

14. Computer-readable medium on which a computer program product is stored, which comprises instructions that cause the power tool (2) of claim 1 to perform the method steps of claim 12 or claim 13.

## Revendications

1. Outil électrique (2), en particulier outil électrique portatif, par exemple machine à meuler, comprenant un outil (5), un moteur électrique (6) pour entraîner l'outil (5) et une unité de commande (7) pour piloter le moteur électrique (6) avec un courant de moteur (MI), dans lequel l'unité de commande (7) dispose d'un mode de démarrage dans lequel l'unité de commande (7) pilote le moteur électrique (6) de telle sorte que le moteur électrique (6) passe pendant le mode de démarrage par une rampe de vitesse de rotation (DR), dans laquelle la vitesse de rotation du moteur électrique (6) est augmentée en continu jusqu'à une vitesse de rotation de travail (ADZ), dans lequel l'unité de commande (7) est réalisée pour régler, pour le mode de démarrage, l'intensité du courant de moteur (MI) sur la base d'une température détectée, **caractérisé en ce que** l'unité de commande (7) est réalisée pour régler, à une température détectée plus élevée, le courant de moteur (MI) avec une intensité de courant plus faible et pour régler, à une température détectée plus faible, le courant moteur (MI) avec une intensité de courant plus élevée.

2. Outil électrique (2) selon la revendication 1, dans lequel l'unité de commande (7) est réalisée pour régler, pour le mode de démarrage, la hausse de la rampe de vitesse de rotation (DR) sur la base de la température détectée.

3. Outil électrique (2) selon la revendication 2, dans lequel l'unité de commande (7) est réalisée pour régler une hausse plus élevée de la rampe de vitesse de rotation (DR) à une température détectée plus élevée et pour régler une hausse plus faible de la rampe de vitesse de rotation (DR) à une température détectée plus basse.

4. Outil électrique (2) selon la revendication précédente, dans lequel l'unité de commande (7) est réalisée pour passer du mode de démarrage dans un mode de travail lorsque la vitesse de rotation de travail (ADZ) est atteinte et pour effectuer dans le mode de travail le pilotage du moteur électrique (6) en utilisant un principe sans capteur, en particulier en utilisant un principe de force contre-électromotrice, pour déterminer un angle de rotor actuel et/ou une vitesse de rotation actuelle du moteur électrique (6).

5. Outil électrique (2) selon une revendication précédente, dans lequel l'unité de commande (7) est réalisée pour effectuer, dans le mode de démarrage, le pilotage du moteur électrique (6) sans détection et/ou prise en compte d'un angle de rotor du moteur électrique (6) et/ou d'une vitesse de rotation du moteur électrique (6).

6. Outil électrique (2) selon une revendication précédente, comprenant un premier capteur de température (18) éloigné du moteur électrique pour détecter la température.

7. Outil électrique (2) selon la revendication 6, dans lequel l'outil électrique (2) dispose d'une section de col (22) et le moteur électrique (6) est disposé sur un premier côté de la section de col (22) et le premier capteur de température (18) est disposé sur un deuxième côté de la section de col (22) opposé au moteur électrique (6).

8. Outil électrique (2) selon la revendication précédente, dans lequel l'outil électrique (2) est conçu comme une meuleuse à col long.

9. Outil électrique (2) selon une revendication précédente, comprenant un dispositif de freinage (34) pour freiner l'outil (5) pendant le mode de démarrage, dans lequel l'effet de freinage du dispositif de freinage est dépendant de la température, et dans lequel l'unité de commande (7) est réalisée pour prendre en compte la dépendance de température du dispositif de freinage par l'intermédiaire du réglage de la hausse et/ou de l'intensité de courant.

10. Outil électrique (2) selon la revendication précédente, comprenant en outre un dispositif de commande (12) permettant de configurer le mode de démarrage.

11. Système (1) avec un outil électrique (2) selon une revendication précédente ainsi qu'un appareil mobile (4) permettant de configurer le mode de démarrage.

12. Procédé de fourniture d'un mode de démarrage pour un outil électrique (2) qui comprend un outil (5) et un moteur électrique (6) pour entraîner l'outil (5), dans lequel le moteur électrique (6) traverse pendant le mode de démarrage une rampe de vitesse de rotation (DR) dans laquelle la vitesse de rotation du moteur électrique (6) est augmentée en continu jusqu'à une vitesse de travail (ADZ), comprenant les étapes :
- de détection d'une température,
- pour le mode de démarrage : de réglage d'une intensité de courant d'un courant de moteur (MI) sur la base de la température détectée, **caractérisé en ce que**, à une température détectée plus élevée, le courant de moteur (MI) est réglé avec une intensité de courant plus faible et le courant de moteur (MI) est réglé, à une température détectée plus faible, avec une intensité de courant plus élevée, et
- de mise à disposition du mode de démarrage avec l'intensité du courant réglée du courant de moteur (MI).

13. Procédé selon la revendication 12, dans lequel l'outil électrique (2) est réalisé selon l'une quelconque des revendications 1 à 10.

14. Support lisible par ordinateur sur lequel est stocké un produit-programme d'ordinateur qui comprend des instructions qui entraînent l'exécution par l'outil électrique (2) selon la revendication 1 des étapes de procédé selon la revendication 12 ou 13.
